(19) Europäisches Patentamt / European Patent Office / Office européen des brevets

(11) **EP 2 246 775 A2**

(12) **EUROPEAN PATENT APPLICATION**

(43) Date of publication:
**03.11.2010 Bulletin 2010/44**

(51) Int Cl.:
***G06F 3/048*** *(2006.01)*

(21) Application number: **10160996.4**

(22) Date of filing: **26.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **28.04.2009 KR 20090037165**

(71) Applicant: **Samsung Electronics Co., Ltd.**
**Suwon-si, Gyeonggi-do (KR)**

(72) Inventor: **Cho, Young Ho**
**Gyeonggi-do, Suwon-si (KR)**

(74) Representative: **Ketelaars, Maarten F.J.M.**
**Nederlandsch Octrooibureau**
**J.W. Frisolaan 13**
**2517 JS  Den Haag (NL)**

(54)    **Method for operating touch screen and mobile terminal including same**

(57)    A method for operating a touch screen and a mobile terminal including the same are provided. A virtual touch map, which corresponds in a one-to-one manner to a display unit and a touch panel disposed on the display unit, is generated. A predetermined region of the virtual touch map is divided into valid touch event regions and an invalid region, and specified index information is allocated to the valid touch event regions to provide rapid touch event processing.

FIG . 1

**Description**

Background of the Invention

Field of the Invention

The present invention relates to a mobile terminal, and more particularly to a method for providing rapid touch recognition of a touch event occurring in a touch panel.

Description of the Related Art

Mobile terminal are becoming more widely used on the basis of their mobility and utility. A conventional mobile terminal may have an MP3 function corresponding to a file playback function, or may have an image collection function corresponding to a digital camera that can collect images. Also, the conventional mobile terminal may support functions capable of performing a mobile game or an arcade game. With the increase of diverse functions supported by the mobile terminal, the size of a display unit of the mobile terminal has also been increased, and recently, a touch screen having a full screen display unit that occupies one whole surface of the mobile terminal has been adopted in the mobile terminal.
However, the conventional mobile terminal has the drawback in that the setting of a valid touch region of a touch screen is quite monotonous. That is, the conventional mobile terminal provides only a rectangular touch recognition region with respect to diverse images output from the display unit. Accordingly, in order to provide a touch recognition region in an image that includes a curve, such as a circle, an ellipse, or the like, the conventional mobile terminal provides a rectangular touch recognition region that includes the curve, and this creates a touch recognition region that is larger than the corresponding image to be allocated. As a result, there is a problem that it is difficult to provide a lot of images for generating a specified input signal in a mobile terminal having a small-size display unit. Also, if duplicate touch events have occurred in the allocated touch recognition regions, i.e. if touch events have occurred in two touch recognition regions, the conventional mobile terminal is designed to disregard the corresponding touch events, and thus it is difficult for a user to generate a desired touch event when a hand shake occurs or it is difficult to make an accurate touch.

Summary of the Invention

The present invention provides a method for operating a touch screen of a mobile terminal, which can set a touch recognition region to match an image output present on a display unit, provide a proper touch recognition with respect to a touch event occurring due to a shaking of the hand, and provide rapid processing of the recognized touch event.
In accordance with an aspect of the present invention, a method for operating a touch screen for a mobile terminal having a touch panel and a display unit, includes: dividing pixels constituting resolution of the display unit or a predetermined number of pixel units; mapping the pixels or the predetermined number of pixel units on at least one lattice unit constituting a matrix of the touch panel in a one-to-one manner; and generating a virtual touch map based on information mapped in the one-to-one manner.
The method for operating a touch screen according to an embodiment of the present invention may further include setting the virtual touch map as at least one of at least one valid touch event region in which an input signal is generated according to a touch event and an invalid touch event region in which the input signal according to the touch event is not generated.
In accordance with another aspect of the present invention, a mobile terminal having a touch screen includes: a display unit capable being divided into predetermined regions and outputting a display screen according to an activation of an application program; a touch panel capable of being divided in the form of a matrix and if a predetermined point is touched, generating a touch event that corresponds to the corresponding touch point; a control unit generating a virtual touch map by mapping pixels or pixel units having a predetermined number of pixels on at least one lattice unit constituting a matrix of the touch panel in a one-to-one manner; and a storage unit storing the virtual touch map.

Brief Description of the Drawings

The above features and advantages of the present invention will be more apparent from the following detailed description in conjunction with the accompanying drawings, in which:
FIG. 1 is a block diagram schematically illustrating a configuration of a mobile terminal according to an exemplary embodiment of the present invention;
FIG. 2 illustrates mapping of a display unit on a touch panel according to an exemplary embodiment of the present invention;

FIG. 3 illustrates an event detection in a virtual touch map according to an exemplary embodiment of the present invention;

FIG. 4 illustrates an example of a virtual touch map having valid touch event regions according to an embodiment of the present invention;

FIGS. 5A and 5B illustrate an example of a virtual touch map that is divided into a plurality of valid touch event regions according to an exemplary embodiment of the present invention;

FIGS. 6A and 6B illustrate an example of a virtual touch maps set by screen UIs according to an exemplary embodiment of the present invention; and

FIG. 7 is flow chart of a method for operating a touch screen according to an exemplary embodiment of the present invention.

Detailed Description of the Invention

Exemplary embodiments of the present invention are described in detail with reference to the accompanying drawings. The same reference numbers are used throughout the drawings to refer to the same or like parts. Detailed descriptions of well-known functions and structures incorporated herein may be omitted to avoid obscuring the subject matter of the present invention.

The terms or words used in the following description and claims should not be construed to be limited to their typical or encyclopedic meanings, but should be construed as meanings and concepts that are coincident with the technical concepts of the present invention. Accordingly, since the embodiments described in the description and the configuration illustrated in the drawings are merely the most preferable embodiments of the invention and do not speak for the technical concepts of the present invention, it should be understood that diverse equivalents and modifications that can be substituted for them may exist at the time of this application and are deemed to be within the scope of the invention claimed.

In the following description, a touch down event may be an event that occurs when a user's finger or a specified object contacts one side of a display unit in which a touch sensor is disposed, a touch move or touch drag event may be an event that occurs when an object, which touches a surface of a touch panel, moves in a certain direction, and a touch up event may be an event that occurs when a finger or an object, which contacts the touch sensor, secedes from the touch sensor.

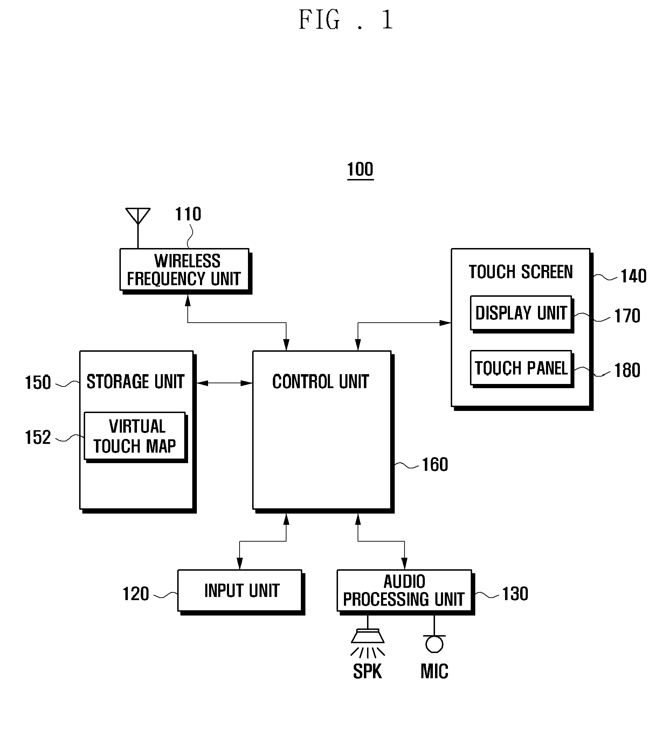

FIG. 1 is a block diagram schematically illustrating a configuration of a mobile terminal according to an exemplary embodiment of the present invention. Referring to FIG. 1, a mobile terminal 100 includes a wireless frequency unit 110, an input unit 120, an audio processing unit 130, a touch screen 140, a storage unit 150, and a control unit 160.

The mobile terminal 100 generates a virtual touch map so that a predetermined region of a touch panel 180 included in the touch screen 140 coincides with a region of a display unit 170. The terminal 100 then controls the processing of a touch event that occurs in the touch panel 180 based on the virtual touch map 152. In this case, the mobile terminal 100 is adapted to map the virtual touch map 152 on respective screen constituent elements that are output to the display unit 170. For example, in the case of outputting a menu screen to the display unit 170, the mobile terminal 100 may be set to divide the whole menu screen into predetermined groups( resolutions) of pixels, and generate a specified touch event with respect to all the pixels included in the corresponding menu region or the predetermined pixel groups. Accordingly, the mobile terminal 100 according to an embodiment of the present invention can recognize the touch event occurring in a specified position of the touch panel arranged on the display unit, like the touch event occurring on the display unit, based on the virtual touch map 152. The terminal 100 further allocates specified index information to the corresponding pixels to support the event processing based on the index information rather than position information of the touch event. Hereinafter, the configuration of the mobile terminal will be described in more detail.

The wireless frequency unit 110 forms a communication channel for voice call and a communication channel for data transmission under the control of the control unit 160. That is, the wireless frequency unit 110 forms a voice call channel, a data communication channel, and a video call channel between mobile communication systems. For this, the wireless frequency unit 110 may include a wireless frequency transmitting unit up-converting and amplifying the frequency of the transmitted signal, a wireless frequency receiving unit low-noise-amplifying and down-converting the frequency of the received signal, and the like. The wireless frequency unit 110 may be activated according to the touch event generated by the touch panel 180 under the control of the control unit 160. Here, the wireless frequency unit 110 may form a call channel based on phone book information stored in the storage unit 150 or a phone number input using the input unit 120. In this process, the user can activate the screen for retrieving the phone book information, and if a menu for retrieving the phone book information is activated, information included in the phone book can be output to the display unit in the form of a list. In this case, the virtual touch map 152, which is a map that corresponds to the screen user interface (UI) corresponding to the phone book, may divide the whole phone book list region into respective information regions, and include regions set so that the corresponding regions have different touch events.

The input unit 120 includes a plurality of input keys and function keys for receiving numeral or text information and setting various kinds of functions. The function keys may include direction keys, side keys, and shortcut keys set to perform specified functions. Also, the input unit generates and transfers signals to the control unit key related to user's setting and function control of the mobile terminal 100. The input unit 120 may be implemented by a QWERTY keypad, a 3*4 keypad, a 4*3 keypad, or the like. The input unit 120 transfers input signals to the control unit 160 that are generated by a user's pressing of a specified key of the keypad. The input unit 120 further generates other types of input signals according to an application program currently activated. The input unit 120 configured in the form of a keypad may be omitted if the mobile terminal 100 according to an embodiment of the present invention provides a full touch screen, and in this case, the touch screen of the mobile terminal according to an embodiment of the present invention may output a key map for replacing the configuration of the input unit that corresponds to the keypad. In this case, the key map may be implemented by a virtual touch map, which includes valid touch event regions from which a key map is output and invalid regions from which the key map is not output. In the case in which the mobile terminal includes several key maps, the virtual touch map may include maps that correspond to several key maps.

The audio processing unit 130 includes a speaker SPK for playing audio data that is transmitted or received during a telephone call or an audio playback (e.g., MP3 audio output) and a microphone MIC for collecting user's voice or other audio signals.

The touch screen 140 includes the display unit 170 and the touch panel 180. The touch screen 140 may have a structure in which the touch panel 180 is arranged on the front surface of the display unit 170. The size of the touch screen 140 may be determined as the size of the touch panel 180.

The display unit 170 displays various kinds of menus of the mobile terminal 100 and information input by a user or information provided to the user. That is, the display unit 170 provides diverse display screens provided according to the use of the mobile terminal 100, e.g. a standby screen, a menu screen, a message preparing screen, a call screen, or the like. On the other hand, the display unit 170 may be formed of a liquid crystal display (LCD), an organic light emitting diode (OLED), or the like. The display unit 170 as described above may have a size that is smaller than the size of the touch panel 180, and may be arranged on the lower part of the touch panel 180. The display unit 170 outputs screen user interfaces (UI) according to the activation of the diverse application programs, and each screen UI includes at least one of valid touch event regions and invalid touch event regions for the control of a corresponding application program. For example, if it is assumed that the screen UI according to the MP3 playback is output to the display unit 170, the screen UI may include a valid touch event region in which buttons of "playback", "pause", "fast forward", "rewind", and the like, required for the MP3 playback are allocated, and an invalid region in which an image allocated to the currently played content or a predetermined image provided by the mobile terminal is output. The valid touch event region and the invalid region may be applied to the virtual touch map 152 allocated according to the MP3 playback as they are. That is, the virtual touch map 152 may include at least one valid touch event region that corresponds to the respective buttons provided in the screen UI and an invalid region that is the remaining region. Here, the valid touch event regions corresponding to the respective buttons may be allocated with respective specified index information according to the characteristics of the buttons. For example, in the virtual touch map 152, the valid touch event region corresponding to the "playback" button may be allocated with "A" index information, and the valid touch event region corresponding to the "pause" button may be allocated with "B" index information. If a touch event occurs in a region corresponding to the "playback" button on the touch panel 180, the control unit of the mobile terminal receives the "A" index information, and based on this, generates a command according to the activation of the "playback" button to control the corresponding application program.

The touch panel 180, arranged to cover the display unit 170, generates a touch event according to the contact of an object or an approaching object, and transfers the generated touch event to the control unit 160. In this case, the touch event transferred by the touch panel 180 may occur in the unit of a lattice that constitutes a matrix in a state in which the touch panel 180 is divided in the form of a matrix. The touch panel 180 as described above, in order to correspond in a one-to-one manner to the display unit 170 based on the virtual touch map 152, may be divided into lattices that correspond to the pixels or pixel groups of the display unit 170. Based on the lattice unit, the touch panel 180 transfers position information of the generated touch event to the control unit 160.

The storage unit 150 stores therein an application program required for the functional operation according to an embodiment of the present invention, a touch screen operating program for operating the touch screen, a virtual touch map 152 for touch recognition according to the present invention, and the like. The storage unit 150 briefly includes a program region and a data region.

The program region may store an operating system (OS) for booting of the mobile terminal 100 and for subsequent operation of the above-described configuration, application programs for executing various files, e.g. an application program for supporting a call function according to functions supported by the mobile terminal 100, a web browser for accessing an Internet server, an MP3 application program for playing other sound sources, an image output application program for displaying a picture and so on, a moving image playback application program, and the like. In particular, the program region according to an embodiment of the present invention can store a touch screen operation program for operating the touch panel included in the touch screen. The touch screen operation program performs power supply to the touch screen, matrix mapping between the touch panel 180 and the display unit 170, activation of the virtual touch map 152, and mapping between the virtual touch map and the touch panel 180.

The data region is a region that stores data generated according to the use of the mobile terminal 100, and stores other types of content. Also, if the display unit 170 is implemented by a touch screen, the data region stores therein a user's input through the touch screen. That is, the data region may store position information generated from the touch panel 180 and index information of the virtual touch map 152 that corresponds to the position information. Also, the data region according to an embodiment of the present invention includes a matrix map that corresponds to the touch panel 180, a display unit map 152 composed of resolutions of the display unit 170 or a predetermined number of pixel groups, and a virtual touch map mapping between the display unit and the touch panel.

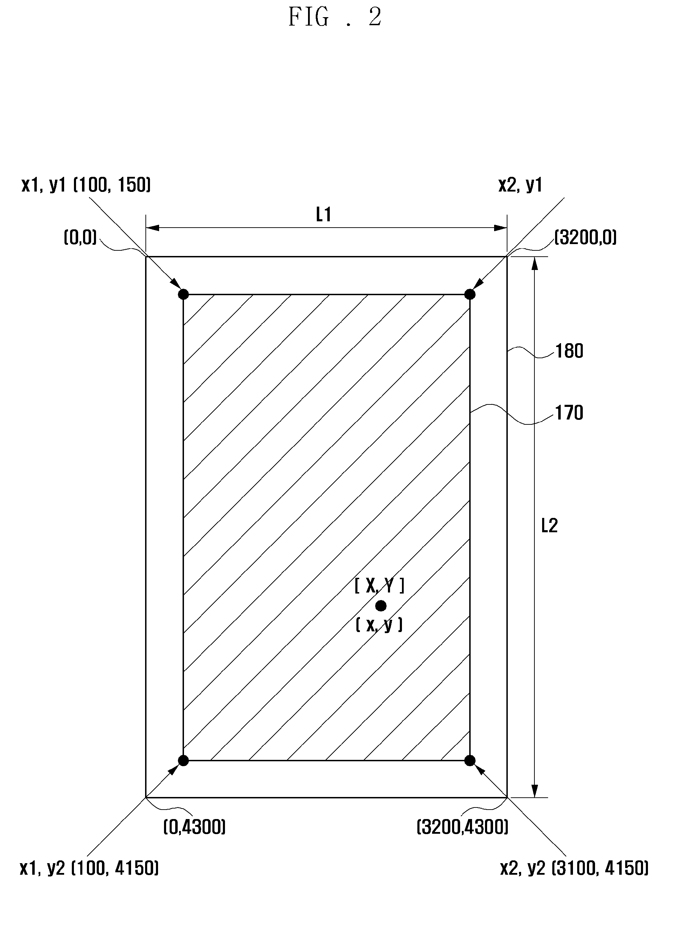

The control unit 160 controls the power supply to the respective constituent elements to support an initialization process, to generate a specified touch event in the unit of a pixel or a lattice that is touched according to the application of the virtual touch map 152 when the initialization process is completed, and to perform or execute a specified function control of the mobile terminal based on the generated touch event. This will be described in detail with reference to FIGS. 2 to 6.

FIG. 2 is illustrates mapping of a display unit 170 on a touch panel 180 according to an exemplary embodiment of the present invention.

Referring to FIG. 2, in the case in which the whole size of the touch panel 180 is set to be larger than the whole size of the display unit 170, a touch event of the mobile terminal is allocated with position information based on respective corner points of the touch panel 180. For example, if it is assumed that the upper left corner region of the touch panel 180 is set to (0, 0) that becomes the basis of the position information, the lower left corner region may be set to (0, 4300), the upper right corner region may be set to (3200, 0), and the lower right corner region may be set to (3200, 4300). Since the touch panel 180 is arranged on the upper side of the display unit 170, if the respective position information of the display unit 170 is defined based on the touch panel 180, the upper left corner region (x1,y1) of the display unit 170 may have, for example, coordinates (100,150) of the touch panel 180, the lower left corner region (x1,y2) may have, for example, coordinates (100,4150) of the touch panel, the upper right corner region (x2,y1) may have, for example, coordinates (3100,150) of the touch panel 180, and the lower right corner region (x2,y2) may have, for example, coordinates (3100,4150) of the touch panel 180.

Here, if the display unit has a specified resolution, e.g. a resolution of 100x100, the region of the touch panel 180 that corresponds to the display unit 170 may be represented as a lattice of 100x100. Also, even if the matrix region constituting the touch panel 180 is composed of lattices that are more minute than the resolution of the display unit 170, the region of the touch panel 180 can allocate the respective divided regions to correspond to the resolution of 100x100. For example, if the region of the display unit 170 is divided in the form of a matrix having a resolution of 100x100 and the region of the touch panel 180 that corresponds to the region of the display unit 170 is composed of a matrix of 400x400, the touch panel 180 allocates four regions for each pixel of the display unit 170, and, thus, the respective pixels of the display unit 170 and the lattices constituting the matrix of the touch panel 180 can correspond to each other in a one-to-one manner.

On the other hand, in the case of mapping the coordinate information of a specified point (x, y) of the display unit 170 on the touch panel 180 based on the above-described set position information, the coordinates (X, Y) on the touch panel 180 can be calculated from the following equations (1) and (2).

$$X = \frac{x - x1}{x2 - x1} L1 \quad \ldots\ldots (1)$$

$$Y = \frac{y - y1}{y2 - y1} L2 \quad \ldots\ldots (2)$$

Here, x1 and x2 mean x-axis corner position values of the display unit based on the touch panel, respectively, and y1 and y2 mean y-axis corner position values of the display unit based on the touch panel, respectively.

Through these equations, the control unit of the mobile terminal can map the respective regions of the display unit 170 on the touch panel 180 based on the dimensions of the touch panel 180. Accordingly, the control unit of the mobile terminal can make the positions of the display unit 170 and the positions of the touch panel 180 correspond to each other in a one-to-one manner. Thereafter, the control unit of the mobile terminal sets a virtual touch map with respect to the touch panel 180 that corresponds to the display unit 170. The virtual touch map as generated above corresponds to each region of the touch panel 180 that corresponds to the display unit. As a result, the virtual touch map supports the determination of a touch event having occurred in the touch panel 180 in the corresponding position as the touch event having occurred in the display unit, when a user touches a specified point as looking at the display unit 170.

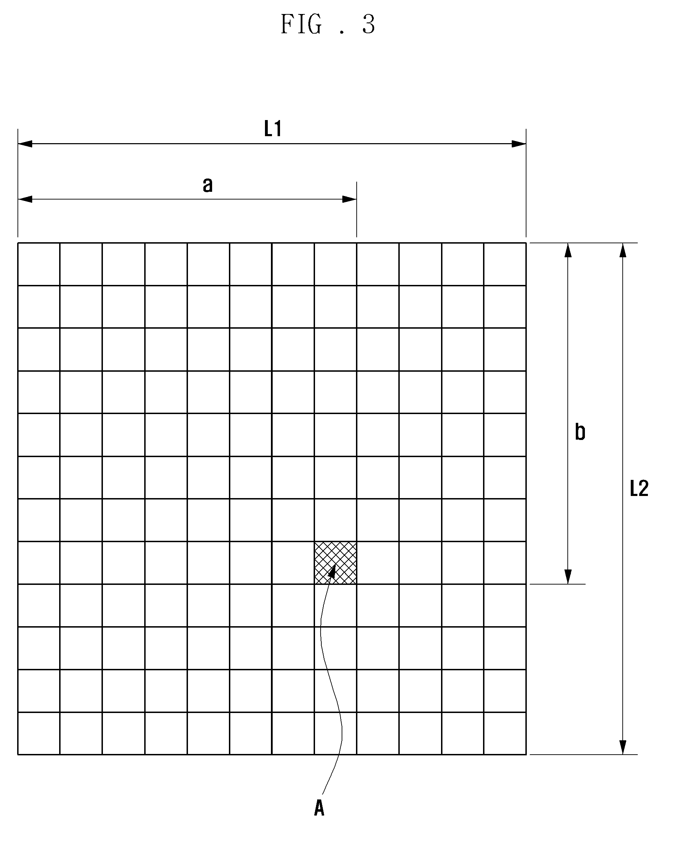

FIG. 3 illustrates a method for recognizing a touch event when the touch event occurs on the display unit through the virtual touch map. The virtual map may be stored in a memory. Here, the memory may be a predetermined region of the storage unit or a RAM region allocated to the control unit.

Referring to FIG. 3, the touch panel region in the form of a matrix that corresponds to the display unit, as described above with reference to FIG. 2, may be arranged in two dimensions. Since the virtual touch map corresponding to the display unit corresponds to the display unit 170 in a one-to-one manner when a touch event occurs at a specified point of the touch panel 180, the virtual touch map directly recognizes the touch event, and immediately maps the touch event on the display unit 170. For example, if a touch event occurs at a point "A" on the touch panel, the mobile terminal can directly recognize the touch event at the point "A" through the virtual touch map. In this case, the control unit of the mobile terminal can rapidly recognize position information on the memory with respect to the point "A" in the virtual touch map using the equation (3).

$$\text{Event of Position (A)} = \text{value} \left[ (\text{StartAddress of Map}) + b * L1 + a \right] \quad (3)$$

Here, the term "Event of Position (A)" represents index information of the touch event "A," and "value" refers to a point "A" in a memory in which the virtual touch map is stored. Also, "StartAddress of Map" means a start address value of a region that corresponds to the virtual touch map in the memory, "a" means an x-axis value in the virtual touch map, and "b" means a y-axis value in the virtual touch map. The mobile terminal can immediately calculate that position in the memory corresponding to the value "A" in which the touch event has occurred.

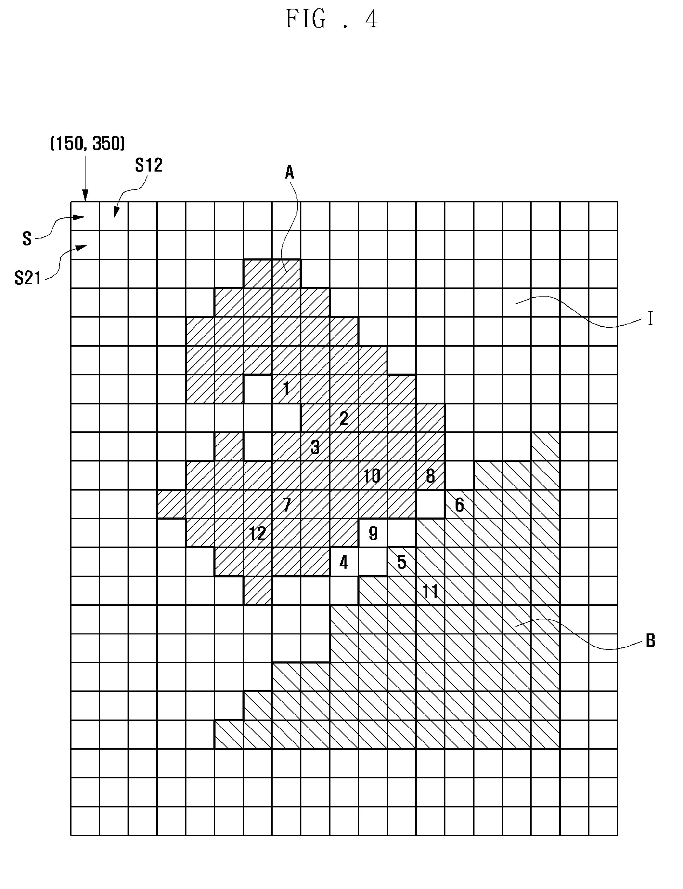

FIG. 4 is a view explaining actual operation of the virtual touch map according to an embodiment of the present invention.

The virtual touch map illustrated in FIG. 4 corresponds to a region of the touch panel corresponding to a part,, or the whole region, of the display unit, and the touch panel may correspond in a one-to-one manner to the respective pixels or a predetermined number of pixel groups that constitute the resolution of the display unit. Also, an image region A is a region that generates a specified input signal for controlling user's functions when a touch event occurs. That is, the region may be a specified menu item in a menu list. In the same manner, an image region B is a region that generates an input signal for controlling functions that are different than the input signal of the image region A when the touch event occurs. That is the image region B may correspond to a "confirmation", "cancel", "backward", or "menu" region in the form of a button output to the display unit of the mobile terminal. Here, the image region A and the image region B are not limited to those regions as described above, and may be regions allocated to generate specified input signals when a touch event occurs in different User Interface screens provided in the mobile terminal.

Referring to FIG. 4, the virtual touch map according to an embodiment of the present invention includes an invalid region I, and an image region A and an image region B that correspond to valid touch event regions. That is, based on the display unit, it may be assumed that in the display unit of the mobile terminal, two icons, including an icon corresponding to the image region A and an icon corresponding to the image region B, which are spaced apart from each other at a predetermined distance, are output in the invalid region I. Also, the start point "S" of the virtual touch map has a memory position value of (150,350). Accordingly, a region that is adjacent to "S" of the virtual touch map, e.g. a region "S12", may have a memory position value of (150,351), and a region "S21" may have a memory position value of (151,350). In other words, in the virtual touch map, memory position values of the respective lattices are determined based on the start point "S."

On the other hand, if a user of the mobile terminal touches a specified point corresponding to the image region A the touch panel arranged on the corresponding display unit reads the touch event at a predetermined interval, e.g. at an interval of 25ms, with respect to the user's touch. However, a user of the mobile terminal may sometimes touch a part of the image region B due to shaking of the hand or an inaccurate touch operation as the user attempts to touch the image region A. Under these conditions, the control unit of the mobile terminal may receive touch events corresponding to values surrounding the touch area. For example, the values corresponding to the touch event may be 1 (157,356), 2 (159,357), 3(158,358), 4(159,362), 5(161,362), 6(163,360), 7(157,360), 8(162,359), 9(160,361), 10(160,359), 11 (162,363), and 12(156,361) as shown in the drawing. Here, 1(157,356) may correspond to a point at which the touch event has started, i.e. a point at which the touch down event has occurred, and 12(156,361) may correspond to a point at which the touch event has been completed, i.e. a point at which a touch up event (a release of the touch down event) has occurred. The remaining values correspond to touch events having occurred according to a touch move in the invalid regions I existing in the image region A, the image region B, and between the image regions A and B.

In the embodiment of the present invention, if the touch event has occurred, the mobile terminal collects information generated in the image region A, the image region B, and the invalid region I with respect to the virtual touch map, and thus the above-described position information can be simplified. That is, the position information in which the touch events have occurred may be recognized as the touch event having occurred in a specified region. More specifically, 1 (157,356) may be recognized as an A touch event having occurred in the image region A, and 2(159,357) and 3 (158,358) may be recognized as the A touch events since they are touch events having occurred in the image region A. Further, 4(159,362) may be recognized as an I touch event having occurred in the invalid region, and 5(161,362) and 6(163,360) may be recognized as a B touch events having occurred in the image region B. Also, 7(157,360), 8(162,359), 10(160,359), and 12(156,361) may be recognized as A touch events, 11 (162,363) may be recognized as the B touch event, and 9(160,361) may be recognized as the I touch event. The control unit of the mobile terminal may arrange the respective touch events as index information, and as a result, since the A event has occurred 7 times, the I event has occurred twice, and the B event has occurred three times, the touch events having occurred as described above can be expressed as A(7)I(2)B(3).

Consequently, since the touch down events and the touch up events have occurred in the image region A and a relatively large number of touch events among other touch events have occurred in the image region A, the control unit of the mobile terminal can judge that the above-described touch events have occurred to touch the image region A. Here, the control unit of the mobile terminal may process the touch events except for A events having the highest weight, i.e. I events and B events, as noise.

Accordingly, if the touch event has occurred, the control unit of the mobile terminal can recognize and arrange them as index information rather than position information. Thus, the memory capacity required to process the information can be reduced and the amount of computation can be greatly reduced to provide a faster processing response. On the other hand, the weight-based valid event determination may be applied when a touch move or a touch drag is not generated, i.e. when a plurality of touch events have occurred among the valid touch event regions that are allocated with the input signal generation for performing different functions, and it is preferable that the weight-based valid touch event determination is not applied in a screen UI to which the touch drag or the touch move function is to be applied, e.g. a screen UI for retrieving or editing pictures or photographs.

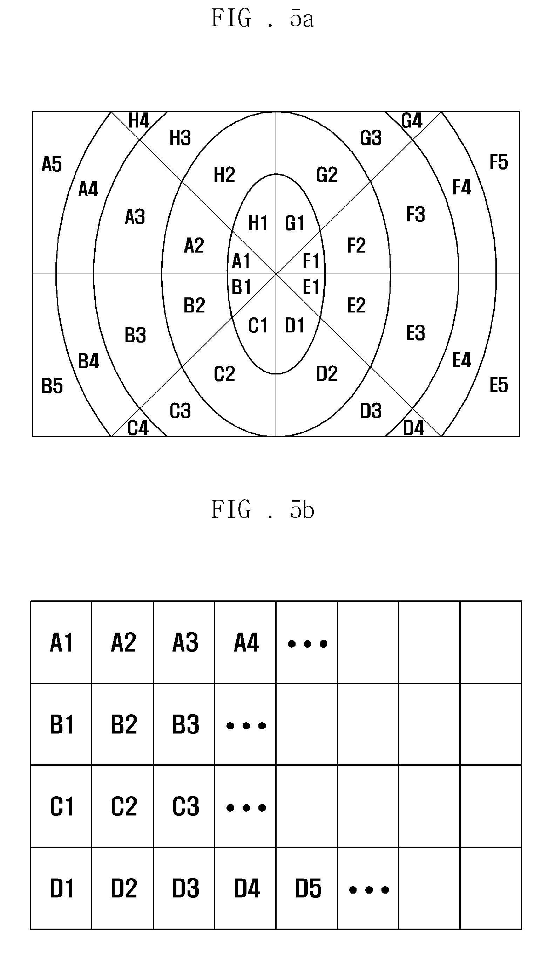

As described above, the virtual touch map according to an embodiment of the present invention supports allocation of a map configuration that corresponds to the display unit to an invalid region and at least one valid touch event region, and to recognize the touch event having occurred at a specified point as index information allocated to the corresponding region. Also, the virtual touch map supports determination of index information having a high weight value with reference to the index information generated in a plurality of regions, and to determine the valid touch event based on the extracted information. The index information based touch recognition will be described in more detail with reference to FIGS. 5A and 5B.

FIGS. 5A and 5B are views explaining a touch recognition function that is provided to rapidly process the generated touch event by allocating specified indexes to division of the virtual touch map and the divided regions.

Referring to FIG. 5A, the control unit of the mobile terminal divides the virtual touch map into predetermined indexes and operates on the respective regions of the virtual touch map for more rapid recognition. For this, the control unit may set center lines vertically and horizontally crossing the virtual touch map and diagonal lines having an angle of 45° with respect to the center lines, respectively, and crossing the virtual touch map. Also, the control unit may arrange ellipses having different long diameters and short diameters around the crossing points of the centerlines and the diagonal lines. As a result, the control unit may set the virtual touch map so that the virtual touch map has regions partitioned by the crossing of the straight lines and the curves as shown in the drawing, i.e. divided regions of A1 to A5, B1 to B5, C1 to C4, D1 to D4, E1 to E5, F1 to F5, G1 to G4, and H1 to H4. If a touch event has occurred at a specified point based on the virtual touch map, the control unit of the mobile terminal recognizes corresponding index information at a point where the touch event has occurred, and can rapidly recognize in which region the touch event has occurred. For example, if a user touches down at a point E1, drags to points of F1, F2, F3, F4, and E4 in that order, and touches up at a point E5, the control unit of the mobile terminal recognizes index information of F1 F2F3F4E4E5, and can recognize that the user has dragged in a direction according to the change of the index information.

Referring to FIG. 5B, the control unit of the portable terminal may partition the virtual touch map into respective regions in the form of a matrix having checks or lattices of a predetermined size, and allocate specified index information, e.g. "A1...", "B1...", "C1...", "D1...", and the like, to the partitioned regions. Accordingly, if a user of the mobile terminal touches a specified point on the display unit, the touch panel transfers information on the corresponding region to the control unit, and the control unit judges at which point the touch has occurred based on the virtual touch map. For example, if the user touches down at a point "A1," touch moves at points "B2" and "C2," and then touches up at a point "D4," the control unit extracts the index information of "A1B2C3D4" from the virtual touch map, and recognizes a corresponding touch event progress.

As described above, the mobile terminal according to an embodiment of the present invention allocates the virtual touch map to the touch panel regions arranged on the display unit, partitions the virtual touch map in a predetermined form, and allocates index information thereto. Accordingly, the mobile terminal according to an embodiment of the present invention can rapidly recognize the touch event occurring in a specified region, and can perform rapid event processing based on the recognized index information.

In summary, the mobile terminal according to an embodiment of the present invention divides the display unit into respective regions in the form of a matrix, makes the divided regions correspond in a one-to-one manner to the touch panel that is divided in the form of a matrix, generates a virtual touch map with respect to the touch panel that corresponds in a one-to-one manner to the display unit, and then divides the virtual touch map into regions for the respective touch regions output to the display unit. Accordingly, the mobile terminal according to an embodiment of the present invention can rapidly recognize the touch event occurring in the touch panel, and can improve the processing speed of the generated touch event. Also, the mobile terminal according to an embodiment of the present invention provides the virtual touch map in the form of a matrix, and thus even if a part or the whole of icons output to the display unit takes a geographical pattern, e.g. a spiral line or a curve, the mobile terminal can accurately divide the corresponding touch regions.

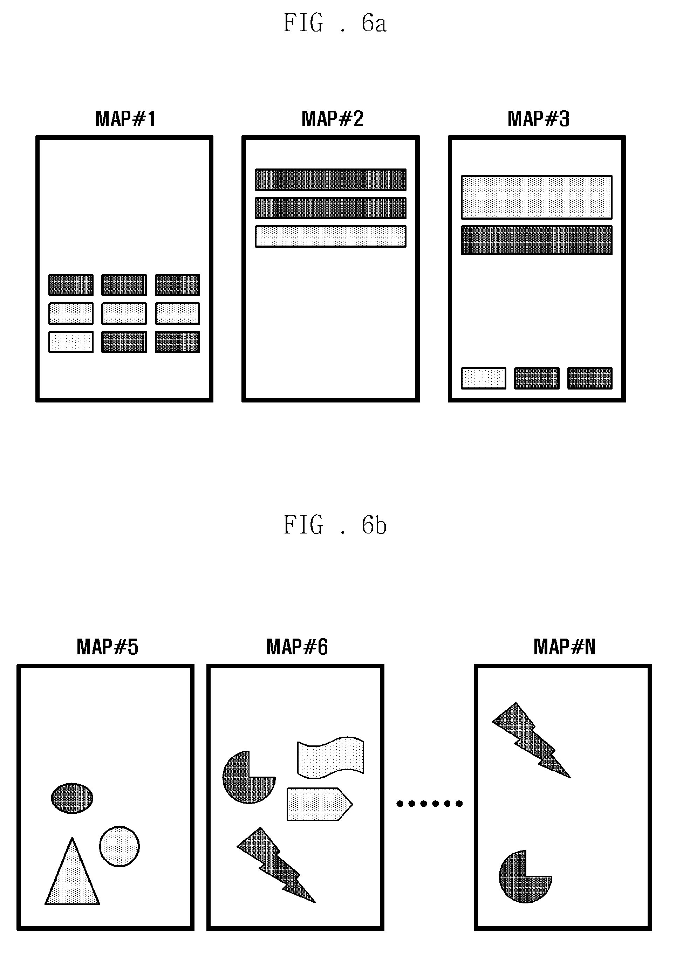

FIGS. 6A and 6B are views explaining a diverse virtual touch map for rapid operation of the virtual touch map according to an exemplary embodiment of the present invention.

Referring to FIG. 6A, "Map #1" represents a map in which a predetermined number of regions, which can be recognized as valid touch events when a touch event has occurred on the center lower side of the map, e.g. 9 regions, are arranged at predetermined intervals and in the form of a rectangle. Here, respective lattices correspond to regions that generate specified touch events, and space except for a space in which the lattices can be arranged corresponds to a region in which an invalid touch event occurs. "Map #2" represents a map in which a predetermined number of regions, which should be recognized as valid touch events when a touch event has occurred on the center upper side of the map, e.g. 3 regions, are vertically arranged at predetermined intervals. "Map #3" represents a map in which two regions with different areas, which are recognized as valid touch events when a touch event has occurred, are arranged on the center upper side, and three divided regions, which can be recognized as valid touch events, are arranged on the lower side. The above-described three kinds of maps have regions, which can be recognized as valid touch events when a touch event has occurred and which are in the form of a rectangle, and thus the configuration of the map is very simple. Accordingly, the control unit of the mobile terminal stores position information of the regions, which should be recognized as valid touch events in the invalid region, rather than storing the respective virtual touch maps in the memory. Thus, the control unit of the mobile terminal, in consideration of the memory efficiency, does not store the regions in which the index information on the invalid regions having a constant size correspond to the valid touch events having different rectangular areas, as the map image, but stores the corresponding regions as text information for setting the corresponding regions, and at a time when the corresponding virtual touch map is required, the control unit sets the information in the memory as the virtual touch map. Here, the three maps store link information corresponding to the respective specified screen user interfaces (UIs), and at the time when the specified screen UI is activated, they could be set in the memory by the control unit.

Referring to FIG. 6B, "Map #5" represents a map that includes valid touch event regions in the form of an ellipse, a circle, and a triangle in the invalid region. Also, "Map #6" represents a map that includes four valid touch event regions composed of looped curves including geometrical curves. "Map #N" is a map having two valid touch event regions that are composed of looped curves including geometrical curves. The maps illustrated in FIG. 6B, as described above, include curves that are not straight lines, and thus in order to set the valid event regions accurately, it is required to perform calculation with respect to respective curved sections. However, such curved sections require a large amount of computation in comparison to using straight line. Thus, it may take a lot of time in setting the memory. Accordingly, the mobile terminal stores the virtual touch maps having the valid touch event regions including the curves in the memory as respective map images and reduces the delay time required for the activation of the corresponding virtual touch map. In this case, the virtual touch map, as shown in FIG. 6A, may store link information that corresponds to the respective specified screen UIs, and when the specified screen UI is activated, the corresponding virtual touch map may be designated by the control unit.

As described above, the mobile terminal according to an embodiment of the present invention can set the virtual touch map that corresponds to the display unit by setting touch panel regions corresponding to the display unit as the virtual touch map in the form of a matrix and applying the valid touch event regions output to the display unit to the virtual touch map. Here, the valid touch event regions of the virtual touch map are allocated with index information, and when a touch event has occurred, it is possible to process the event only with the index information regardless of the recognized position information to provide rapid touch event processing.

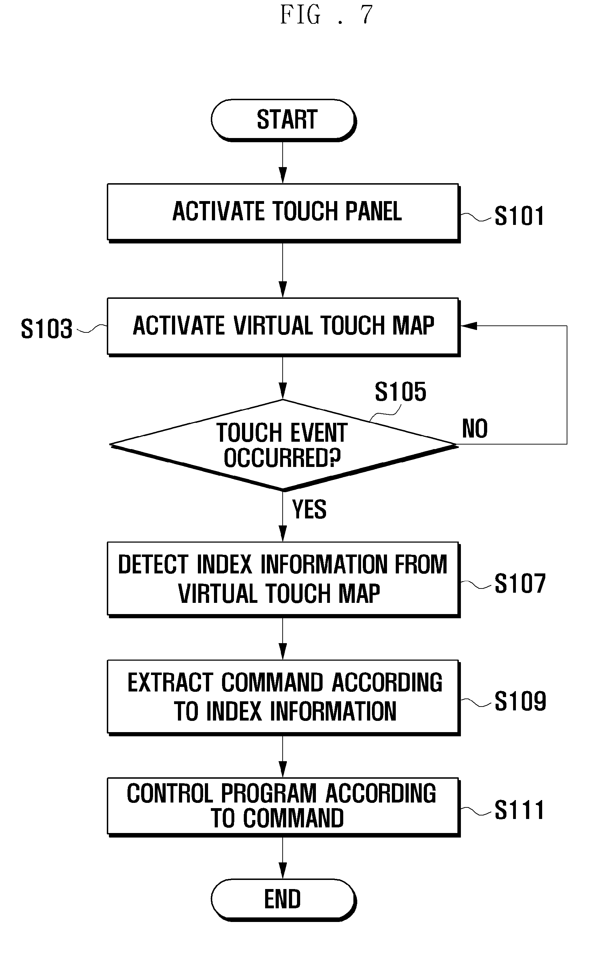

FIG. 7 is a flowchart of a method for operating a touch event according to an exemplary embodiment of the present invention.

Prior to the description of the touch event operating method, it is assumed that the mobile terminal stores a virtual touch map. That is, with the activation of diverse user functions including a standby screen function, the mobile terminal stores the virtual touch map in which valid touch event regions for generating an input signal in a specified screen are set or preset in the memory. In the virtual touch map, the respective valid touch event regions are allocated with specified index information, and the control unit of the mobile terminal is made aware of which command is to be generated based on the index information.

Referring to FIG. 7, according to the touch event operating method provided herein, after the booting process is completed and the configuration of the mobile terminal is initialized (not shown), the mobile terminal activates the touch panel in step S101. Here, the mobile terminal, which may have been in a sleep state, may maintain the touch screen in an inactive state, and thus at a time when the sleep state is released, the mobile terminal may control the touch panel to be activated.

Once the touch panel is activated, the mobile terminal may output a predetermined specified screen, e.g. a standby screen or a screen corresponding to an application program that has been currently activated, to the display unit. Accordingly, the mobile terminal may further activate the virtual touch map that corresponds to the screen currently being output to the display unit in step S103. In this case, if the virtual touch map is set as text information, the mobile terminal may set the virtual touch map in a memory region based on the text information. However, if the virtual touch map is stored as a map image, the mobile terminal may detect in which space of the memory the corresponding virtual touch map is set, and may designate the virtual touch map based on the corresponding detected information. In designating the virtual touch map, the mobile terminal may divide the display into an invalid region and valid touch event regions included in the virtual touch map. The respective valid touch event regions may be allocated with specified index information. If the specified index information has already been allocated to the respective valid touch event regions in the virtual touch map, the mobile terminal may receive the index information from the respective valid touch event regions if the touch event has occurred.

Next, in a state in which the touch panel and the virtual touch map have been activated, the mobile terminal confirms whether a touch event has occurred in step S105. If no separate touch event has occurred, the mobile terminal goes to step S103 and maintains the activation of the touch panel and the activation of the virtual touch map. On the other hand, if no touch event occurs for more than a predetermined time, the mobile terminal automatically changes its state to a sleep state according to a predetermined schedule (not shown).

On the other hand, if the touch event has occurred in step S105, the mobile terminal detects the event index information from the virtual touch map in step S107. The virtual touch map may include an invalid region and at least one valid touch event region, and the valid touch event region may be allocated with specified index information. Accordingly, if the touch event has occurred in the specified valid touch event region of the virtual touch map, the mobile terminal can detect the index information allocated to the corresponding touch event region.

Next, the mobile terminal extracts a command according to the index information in step S109. For this, the respective valid touch event regions of the virtual touch map may include information of a specified command. On the other hand, the mobile terminal may pre-store data which can convert the index information transferred from the valid touch event region of the specified virtual touch map into a specified command, and extract the specified command with reference to the pre-stored data.

If the command is extracted, the mobile terminal may perform a function or operation according to the corresponding command, i.e. the currently activated application program control, in step S111.

According to the method for operating a touch screen and the mobile terminal including the same according to an embodiment of the present invention, the touch recognition region can be partitioned in accordance with respective image shapes of the display unit, rapid recognition and processing of the generated touch event is possible, and valid processing of the touch event caused by shaking hand shake or other inaccurate operations is possible.

The above-described methods according to the present invention can be realized in hardware or as software or computer code that can be stored in a recording medium such as a CD ROM, an RAM, a floppy disk, a hard disk, or a magneto-optical disk or downloaded over a network, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer is loaded with, or accesses, code that may be stored in a memory component, the general purpose computer is transformed into a special purpose computer suitable for at least executing and implementing the processing shown herein.

Although exemplary embodiments of the present invention have been described in detail hereinabove, it should be clearly understood that many variations and modifications of the basic inventive concepts herein described, which may be apparent to those skilled in the art, will still fall within the spirit and scope of the exemplary embodiments of the present invention as defined in the appended claims.

**Claims**

1. A method for operating a touch screen (140) for a mobile terminal having a touch panel (180) and a display unit (170), comprising:

   dividing pixels constituting resolution of the display unit or a predetermined number of pixel units;
   mapping the pixels or the predetermined number of pixel units on at least one lattice unit constituting a matrix of the touch panel in a one-to-one manner; and
   generating a virtual touch map based on information mapped in the one-to-one manner

2. The method of claim 1, further comprising at least one of:

   detecting position information that corresponds to the occurring touch event based on a position in the virtual touch map (S107);and
   setting the virtual touch map as at least one of at least one valid touch event region (A) in which an input signal according to a touch event is generated and an invalid region (I) in which the input signal according to the touch event is not generated.

3. The method of claim 1, wherein the valid touch event region (A) is a looped region which includes at least one of a straight line and a curve.

4. The method of claim 1, further comprising at least one of:

   allocating specified index information to the at least one valid touch event region;
   transferring the allocated index information to a control unit if the touch event has occurred in the valid touch event region; and
   receiving a plurality of index information from a plurality of valid touch event region (1,2,3),
   calculating weight values of the received index information, and
   determining the touch event as that e index information having a largest weight value.

5. The method of claim 1, further comprising at least one of:

   making the virtual touch map correspond to at least one of at least one valid touch event region (A) and an invalid region (I) included in a specified screen user interface,
   storing the virtual touch map to which the specified screen user interface has been applied in a memory as a map image; and
   activating the virtual touch map stored in the memory when the specified screen user interface is activated.

6. The method of claim 5, wherein the valid touch event region included in the virtual touch map is a looped region of including a curve.

7. The method of claim 5, further comprising at least one of:

   making the virtual touch map correspond to at least one of at least one valid touch event region and an invalid region (A) included in a specified screen user interface, and storing position information of at least one of at least one valid touch event region and an invalid region (I) included in the virtual touch map as text information; and
   setting the virtual touch map (152) in the memory based on the text information when the specified screen user interface is activated.

8. A mobile terminal (100) having a touch screen (140) comprising:

   a display unit capable of :

      being divided into predetermined regions in pixel units; and
      displaying a display screen according to an activation of an application program;

a touch panel (180) capable of:

being divided in the form of a matrix; and
generating a touch event that corresponds to a touch point when a predetermined point within the matrix is touched;

a control unit (160) generating:

a virtual touch map (152) by mapping pixels or pixel units having a predetermined number of pixels in at least one lattice unit constituting a matrix of the touch panel in a one-to-one manner; and

a storage unit (150) storing the virtual touch map (152).

9. The mobile terminal of claim 8, wherein the control unit (160) detects position information that corresponds to the occurring touch event based on a position in the virtual touch map ; and
sets respective regions of the virtual touch map as at least one of at least one valid touch event region in which an input signal according to the touch event is generated and an invalid region in which the input signal according to the touch event is not generated.

10. The mobile terminal of claim 9, wherein the valid touch event region (A) is a looped region which includes at least one of: a straight line and a curve.

11. The mobile terminal of claim 9, wherein the virtual touch map (152) includes index information that is allocated to the at least one valid touch event region.

12. The mobile terminal of claim 11, wherein the control unit (160) detects the allocated index information if a touch event has occurred in the valid touch event regions; and
if a plurality of index information is received from a plurality of valid touch event regions, the control unit calculates weight values of the received index information, and determines the touch event as that index information having a largest weight value.

13. The mobile terminal of claim 9, wherein the storage unit (150) stores at least one of:

a map image corresponding to a virtual touch map (152) in which at least one valid touch event region and an invalid region, which are included in the specified screen interface is set; and
text information indicating at least one position information of the valid touch event region and the invalid region included in the virtual touch map 152.

14. The mobile terminal of claim 13, wherein the control unit (160) activates the stored map image and sets the virtual touch map (152) in a memory based on the text information when the screen user interface is activated.

15. The mobile terminal of claim 13, wherein the valid touch event region included in the virtual touch map (152) is a looped region of which at least a part includes a curve.

FIG . 1

100

# FIG . 2

x1, y1 (100, 150)                                    x2, y1

L1

(0,0)                                            (3200,0)

180

170

[ X, Y ]
[ x, y ]

L2

(0,4300)                              (3200,4300)

x1, y2 (100, 4150)                    x2, y2 (3100, 4150)

FIG . 3

FIG . 4

## FIG . 5a

## FIG . 5b

| A1 | A2 | A3 | A4 | • • • | | | |
|----|----|----|----|-------|---|---|---|
| B1 | B2 | B3 | • • • | | | | |
| C1 | C2 | C3 | • • • | | | | |
| D1 | D2 | D3 | D4 | D5 | • • • | | |

# FIG . 6a

**MAP#1**

**MAP#2**

**MAP#3**

# FIG . 6b

**MAP#5**

**MAP#6**

**MAP#N**

FIG . 7

```
                        ┌──────────┐
                        │  START   │
                        └──────────┘
                             │
                             ▼
         ┌─────────────────────────────────────┐
         │       ACTIVATE TOUCH PANEL           │────  S101
         └─────────────────────────────────────┘
                             │
                             ▼
 S103 ───┌─────────────────────────────────────┐◄──────┐
         │     ACTIVATE VIRTUAL TOUCH MAP       │       │
         └─────────────────────────────────────┘       │
                             │            S105          │
                             ▼                          │
                       ◇───────────────◇    NO          │
                      ╱  TOUCH EVENT    ╲───────────────┘
                      ╲   OCCURRED?     ╱
                       ◇───────────────◇
                             │ YES
                             ▼
         ┌─────────────────────────────────────┐
         │  DETECT INDEX INFORMATION FROM       │────  S107
         │       VIRTUAL TOUCH MAP              │
         └─────────────────────────────────────┘
                             │
                             ▼
         ┌─────────────────────────────────────┐
         │   EXTRACT COMMAND ACCORDING          │────  S109
         │     TO INDEX INFORMATION             │
         └─────────────────────────────────────┘
                             │
                             ▼
         ┌─────────────────────────────────────┐
         │  CONTROL PROGRAM ACCORDING           │────  S111
         │        TO COMMAND                    │
         └─────────────────────────────────────┘
                             │
                             ▼
                        ┌──────────┐
                        │   END    │
                        └──────────┘
```